**Europäisches Patentamt**

**European Patent Office**

**Office européen des brevets**

(19)

(11) Veröffentlichungsnummer: **0 091 500**
**B1**

(12) # EUROPÄISCHE PATENTSCHRIFT

(45) Veröffentlichungstag der Patentschrift:
02.07.86

(21) Anmeldenummer: **82103089.7**

(22) Anmeldetag: **10.04.82**

(51) Int. Cl.⁴: $G\ 01\ J\ 3/46$, $G\ 01\ N\ 21/55$

(54) Verfahren und Vorrichtung zur Dichtemessung von Farbschichten noch feuchter Druckfarbe.

(43) Veröffentlichungstag der Anmeldung:
19.10.83 Patentblatt 83/42

(45) Bekanntmachung des Hinweises auf die Patenterteilung:
02.07.86 Patentblatt 86/27

(84) Benannte Vertragsstaaten:
AT BE CH DE FR GB IT LI NL SE

(56) Entgegenhaltungen:
DE-A-1 547 467
DE-A-2 238 007
DE-A-2 932 705
DE-B-2 805 511
US-A-3 790 286

(73) Patentinhaber: **DR.- ING. RUDOLF HELL GmbH,**
**Grenzstrasse 1-5, D-2300 Kiel 14 (DE)**

(72) Erfinder: **Grieger, Dieter, Heider Strasse 12, D-2300**
**Kiel (DE)**

EP 0 091 500 B1

LIBER, STOCKHOLM 1986

## Beschreibung

## Technisches Gebiet

Die Erfindung gehört zum Gebiet der Drucktechnik und ist besonders für Densitometer und Druckmaschinen geeignet.

## Stand der Technik

In dem DIN-Entwurf Nr. 16536, DK 655.3062.12: 535.65, April 1979, Teil 2, 4.1, Meßgeometrie, ist angegeben, daß zur densitometrischen Ausmessung der Lichteinfall zur Messung unter 45° gegen die Flächennormale ausgerichtet sein soll.

Es hat sich aber gezeigt, daß bei der Anwendung herkömmlicher Densitometer zur Messung der Proben der Glanz der noch druckfeuchten Farbe die Messung verfälscht.

Es ist weiterhin durch DE-A-1 547 467 ein fotoelektrisches Farbhelligkeits-Vergleichsgerät bekannt, bei dem zur Vermeidung von Fehlmessungen durch Glanz der zu messenden Oberfläche und zur Fernhaltung von Fremdlicht ein Halbleiter-Fotoelement und ein Zeigergalvanometer vorgesehen sind.

Die Meßstrahlung wird durch eine Irisblende und ein Polarisationsfilter auf die Prüffläche gerichtet. Das reflektierte Licht wird durch Reflexion an den Wänden des die Meßeinrichtung umgebenen Gehäuses über ein zweites Polarisationsfilter auf das Fotoelement gegeben, dessen Fotostrom durch das Galvanometer angezeigt wird.

Aus dem Dokument US - A-3, 790, 286 ist ein Testverfahren für kohleschwarze Oberflächen bekannt, bei dem ein Lichtstrahl zur Messung der Reflexion der Oberfläche durch ein Polarisationsfilter auf die Oberfläche gerichtet wird und das reflektierte Licht mittels eines weiteren um 90° gegen das erste Polarisationsfilter gedrehten Polarisationsfilters auf einen Detektor geleitet wird.

Diese Meßanordnung ermöglicht zwischen verschiedenen "Schwarz" zu unterscheiden und soll eine bessere Korrelation zwischen der Reflektanz und dem gemessenen Oberflächenbereich erreichen.

Bei der Kontrolle der Farbführung in schnell laufenden Druckmaschinen ist es nötig, ständig Proben zum Messen zu entnehmen, um vor dem Auftreten unzulässiger Abweichungen gegen diese Abweichungen eine entsprechende Steuerung oder Regelung der Druckfarbenmenge vorzunehmen.

Wartet man bei dieser Meßmethode ab, bis die Farbe weggeschlagen ist, so kommt z. B. bei der Druckmaschine der zu regelnde oder steuernde Eingriff zu spät, so daß bereits eine Menge von Makulatur angefallen ist. Bei dem eingangs beschriebenen Densitometer und bei den beiden vorher beschriebenen Meßanordnungen mit zwei Polarisationsfiltern treten entsprechende Fehlmessungen auf.

Der vorliegenden Erfindung liegt daher die Aufgabe zugrunde, ein Verfahren und eine Einrichtung anzugeben, mit denen diese Meßfehler, die durch den Glanz der noch feuchten Druckfarbe entstehen, vermieden werden.

Die Erfindung erreicht dies durch die im kennzeichnenden Teil des Anspruchs 1 angegebenen Merkmale. Vorteilhafte Weiterbildungen der Erfindung sind in den Unteransprüchen 2 bis 7 beschrieben. Die Erfindung wird im folgenden anhand der Figur näher beschrieben.

In der Figur ist ein Bedruckstoff 1 dargestellt, auf dem die noch feuchte Druckfarbenschicht 2 aufgetragen ist. Ein zu messender Farbfleck 21 wird entlang einer optischen Achse 3 von einer Lichtquelle 4 und einem zwischen Lichtquelle 4 und Farbfleck 21 angeordneten Polarisationsfilter beleuchtet. Das von dem Farbfleck 21 reflektierte Licht gelangt bei der gezeigten Anordnung entlang der Flächennormalen 6 über eine Linse 7 auf eine Fotozelle 8, welche das reflektierte Licht in einen elektrischen Meßstrom umwandelt. Der Strahlengang 3 des aus dem Polarisationsfilter 5 austretenden Lichtes ist so angeordnet, daß er mit der Normalen 6 etwa den Brewster-Winkel bildet. Hierdurch wird erreicht, daß alles Licht, was auf die noch feuchte Farbschicht trifft, von dieser Farbschicht absorbiert und diffus wieder ausgesandt wird. Dies hat zur Folge, daß bei dieser Art der Beleuchtung kein Glanzeffekt auftritt, wodurch üblicherweise Licht der Messung entzogen wird. Es hat sich gezeigt, daß der Brewster-Winkel nicht exakt eingehalten zu werden braucht, daß die Meßeinrichtung auch dann noch befriedigende Ergebnisse liefert, wenn der Brewster-Winkel mit ± 15 % eingehalten wird.

Die Fotozelle 8 kann vorzugsweise in der Normalen 6 angeordnet sein, dies ist aber nicht unbedingt erforderlich, da die Lichtreflektion diffus ist.

Weiterhin kann diese Meßmethode auch an gekrümmten Flächen vorgenommen werden, d. h. nicht nur in einer, wie in der Figur dargestellten Ebene, sondern auch innerhalb einer Druckmaschine, in der der bedruckte Bogen sich auf der Oberfläche einer Walze befindet.

Die Polarisationsrichtung des Polarisationsfilters ist so zu wählen, daß der E-Vektor der vom Filter durchgelassenen Lichtwellen parallel zur Einfallsebene des Beleuchtungsstrahlenganges schwingt (sog. p-Wellen). Das Licht an dem Polarisationsfilter kann zum Beispiel mittels einer Lampe direkt oder auch über Lichtleitfasern oder Spiegel zugeführt werden.

Bei den handelsüblichen Druckfarben hat sich gezeigt, daß der Brewster-Winkel bei 56° liegt. Bei diesem Winkel ist der Reflektionsgrad der noch feuchten Druckfarbe für p-Wellen gleich null, d. h. es wird, wie bereits erwähnt, der Probenbeleuchtung kein Licht durch Glanzeffekte entzogen, alles Licht wird in die Probe hineingebeugt und dort diffus reflektiert.

## Patentansprüche

1. Verfahren zur Dichtemessung von Farbschichten noch feuchter Druckfarbe, dadurch gekennzeichnet, daß die Farbschicht zur densitometrischen Messung mit parallel zur Einfallsebene polarisiertem Licht im wesentlichen unter dem Brewster-Winkel der jeweiligen Druckfarben zur Normalen beleuchtet wird.

2. Verfahren nach Anspruch 1, dadurch gekennzeichnet, daß die Beleuchtung in einem Winkelbereich von ± 15 % des Brewster-Winkels zur Normalen erfolgt.

3. Verfahren nach Anspruch 1, dadurch gekennzeichnet, daß die Beleuchtung unter dem Brewster-Winkel zur Normalen vorgenommen wird.

4. Vorrichtung zur Dichtemessung von Farbschichten noch feuchter Druckfarbe zur Durchführung des Verfahrens nach Anspruch 1 mit einer Lichtquelle (4) zur Beleuchtung der Farbschicht (2) und einem fotoelektrischen Empfänger (8) zur Aufnahme und Umwandlung des Meßlichtes in ein elektrisches Signal, dadurch gekennzeichnet, daß zwischen Lichtquelle und zu messender Farbschicht ein Polarisationsfilter (5) angeordnet ist, derart, daß die Schwingungsrichtung des E-Vektors der durchgelassenen Lichtwellen zur Einfallsebene parallel ist und daß die optische Achse (3) der Beleuchtung der Farbschicht im wesentlichen unter dem Brewster-Winkel gegenüber der Normalen (6) zur Oberfläche der Farbschicht geneigt ist.

5. Vorrichtung nach Anspruch 4, dadurch gekennzeichnet, daß die optische Achse (3) der Beleuchtung der Farbschicht (2) in einem Bereich von ± 15 % um den Brewster-Winkel zur Normalen (6) angeordnet ist.

6. Vorrichtung nach Anspruch 4, dadurch gekennzeichnet, daß die optische Achse (3) der Beleuchtung der Farbschicht (2) exakt im Brewster-Winkel zur Normalen (6) angeordnet ist.

7. Vorrichtung nach einem der Ansprüche 4, 5 oder 6, dadurch gekennzeichnet, daß der fotoelektrische Wandler (8) im Bereich der Normalen (6) zum Auftreffpunkt des polarisierten Lichtes angeordnet ist.

## Revendications

1°) Procédé pour la mesure de densite de couches de couleur d'une couleur d'impression encore humide, caractérisé en ce qu'on éclaire la couche de couleur pour effectuer la mesure de densimétrie avec une lumière polarisée parallèlement au plan incident, essentiellement suivant l'angle de Brewster de la couleur d'impression correspondante par rapport à la normale.

2°) Procédé selon la revendication 1, caractérisé en ce que l'éclairage se fait dans une plage angulaire de ± 15 % de l'angle de Brewster par rapport à la normale.

3°) Procédé selon la revendication 1, caractérisé en ce que l'éclairage est effectué sous l'angle de Brewster par rapport à la normale.

4°) Dispositif pour la mesure de densité de couches de couleur d'une couleur d'impression encore humide pour la mise en oeuvre du procédé selon la revendication 1 avec une source de lumière (4) pour éclairer la couche de couleur (2) et un récepteur photoélectrique (8) pour recevoir et convertir la lumière de mesure en un signal électrique, caractérisé en ce qu'entre la source de lumière et la couche de couleur à mesurer, il est prévu un filtre de polarisation (5) de façon que la direction d'oscillation du vecteur (E) des ondes lumineuses traversantes soit parallèle au plan incident et en ce que l'axe optique (3) de l'éclairage de la couche de couleur soit essentiellement incliné suivant l'angle de Brewster par rapport à la normale (6) à la surface de la couche de couleur.

5°) Dispositif selon la revendication 4, caractérisé en ce que l'axe optique (3) de la couche de couleur (2) à éclairer est situé dans une plage de ± 15 % de l'angle de Brewster par rapport à la normale (6).

6°) Dispositif selon la revendication 4, caractérisé en ce que l'axe optique (3) de l'eclairage de la couche de couleur (2) est exactement à l'angle de Brewster par rapport à la normale (6).

7°) Dispositif selon l'une des revendications 4, 5 ou 6, caractérisé en ce que le convertisseur photoélectrique (8) est placé au niveau de la normale (6) du point d'incidence de la lumière polarisée.

## Claims

1. Method of measuring the density of colour layers of still damp printing ink, characterised in that the colour layer is illuminated by means of light polarised parallel to the incidence plane substantially at the Brewster angle, of the printing inks in question to the perpendicular, for the purpose of densitometric measurement.

2. Method according to claim 1, characterised in that the illumination occurs within an angular range of plus or minus 15% of the Brewster angle to the perpendicular.

3. Method according to claim 1, characterised in that the illumination is performed at the Brewster angle to the perpendicular.

4. Device for measuring the density of colour layers of still damp printing ink for application of the method according to claim 1, comprising a light source (4) for illumination of the colour layer (2) and a photo-electric receiver (8) for reception and conversion of the mensuration light into an electrical signal, characterised in that a polarising filter (5) is situated between the light source and the colour layer to be measured, in such manner that the direction of oscillation of the E-vector of the transmitted light waves is parallel to the plane of incidence and that the optical axis (3) of the illumination of the colour layer is inclined substantially at the Brewster angle with respect to the perpendicular (6) to the surface of the colour layer.

5. Device according to claim 4, characterised in that the optical axis (3) of the illumination of the colour layer (2) is situated within a range of plus or minus 15% around the Brewster angle to the perpendicular (6).

6. Device according to claim 4, characterised in that the optical axis (3) of the illumination of the colour layer (2) is situated precisely at the Brewster angle to the perpendicular (6).

7. Device according to one of the claims 4, 5 or 6, characterised in that the photoelectric transducer (8) is situated in the region of the perpendicular (6) to the point of incidence of the polarised light.